# EUROPEAN PATENT APPLICATION

(11) **EP 1 892 778 A1**
(43) Date of publication of application: **27.02.2008**
(21) Application number: 06782540.6
(22) Date of filing: 09.08.2006
(51) Int. Cl.: H01M 2/16, H01M 4/42, H01M 6/08

(54) **MANGANESE DRY CELL**

(30) Priority: 09.08.2005 JP 2005230654; 09.08.2006 JP 2006216383
(71) Applicant: MATSUSHITA ELECTRIC INDUSTRIAL CO., LTD., Osaka 571-8501 (JP)
(72) Inventor: SAKAMOTO, Kouyou, c/o Matsushita Ele. Ind.Co.,Ltd., Chuo-ku, Osaka 540-6207 (JP); INOKUCHI, Koji, c/o Matsushita Ele. Ind.Co.,Ltd., Chuo-ku, Osaka 540-6207 (JP); OGINO, Keiji, c/o Matsushita Ele. Ind.Co.,Ltd., Chuo-ku, Osaka 540-6207 (JP)
(74) Representative: TBK-Patent
(86) International application number: PCT/JP2006/315724
(87) International publication number: WO 2007/018231

(57) **Abstract**

A manganese dry battery of the invention includes a positive electrode material mixture including manganese dioxide, a negative electrode zinc can with a lead content equal to or less than 0.03% by weight, and a separator comprising a paper with a paste material applied thereto. The separator contains 0.005 to 0.05 part by weight of bismuth in the form of BiCl₃ per 100 parts by weight of a dry solid component in the paste material. It is thus possible to obtain a manganese dry battery that uses a negative electrode zinc can with a reduced lead content and exhibits excellent high-rate discharge performance and storage performance.

## Description

### Technical Field

The present invention relates to a manganese dry battery using a negative electrode zinc can with a reduced lead content.

### Background Art

In manganese dry batteries, lead has been added to their negative electrode zinc cans to enhance the workability, mechanical strength, and corrosion resistance of zinc used as a material therefor.
However, in order to prevent environmental pollution caused by dry batteries after use, various examinations have recently been made on techniques of not using toxic substances such as mercury, cadmium, and lead in battery components and techniques of not releasing such toxic substances to the environment.

With respect to techniques of not releasing toxic substances to the environment, for example, Patent Document 1 proposes adding 0.05 to 5 parts by weight of bismuth in the form of a bismuth oxide to a separator per 100 parts by weight of the dry solid component in a paste material. Also, Patent Document 2 proposes the addition of 0.1 to 8 parts by weight of indium in the form of an indium salt to a separator per 100 parts by weight of the dry solid component in a paste material.
It is alleged that the indium salt or bismuth oxide added to the separator dissolves into an electrolyte after battery production, thereby forming a bismuth layer or indium layer on the surface of a negative electrode zinc can, so that the layer suppresses the dissolution of zinc from the negative electrode zinc can.

However, in Patent Document 1, since a large amount of bismuth is added, a thick bismuth layer is formed on the surface of the negative electrode zinc can during a long-term storage. This layer serves as a resistance component, so that a problem of degradation of high-rate discharge performance tends to occur.
Meanwhile, indium used in Patent Document 2 has a smaller potential difference relative to zinc than bismuth or lead, and the substitution reaction between indium and zinc proceeds slowly. Thus, an indium layer is not easily formed on the zinc surface, and the effect of suppressing zinc dissolution in an early stage immediately after production cannot be sufficiently obtained. Suppressing zinc corrosion in an early stage requires a large amount of indium, and the large amount of indium serves as a resistance component. Thus, a problem of degradation of high-rate discharge performance tends to occur.
Patent Document 1: Japanese Laid-Open Patent Publication No. Hei 5-159767
Patent Document 2: Japanese Laid-Open Patent Publication No. Sho 61-78051

### Disclosure of Invention

### Problem to be Solved by the Invention

In order to solve the problems as described above, an object of the present invention is to provide an environmentally friendly manganese dry battery using a negative electrode zinc can with a reduced lead content and having high-rate discharge performance and storage performance that are equivalent or superior to those of conventional batteries using lead-containing negative electrode zinc cans.

### Means for Solving the Problem

The present invention is directed to a manganese dry battery including a positive electrode material mixture including manganese dioxide, a negative electrode zinc can with a lead content equal to or less than 0.03% by weight, and a separator comprising a paper with a paste material applied thereto. The separator contains 0.005 to 0.05 part by weight of bismuth in the form of BiCl₃ per 100 parts by weight of a dry solid component in the paste material.

Preferably, the separator further contains 0.01 to 1.0 part by weight of indium in the form of InCl₃ per 100 parts by weight of the dry solid component in the paste material.
The negative electrode zinc can preferably has a Vickers hardness of 30 to 55 Hv.
The negative electrode zinc can preferably contains 0.001 to 0.005 % by weight of manganese.

### Effects of the Invention

According to the present invention, it is possible to provide an environmentally friendly manganese dry battery using a negative electrode zinc can with a reduced lead content and having excellent discharge performance and storage performance.

### Brief Description of the Drawing

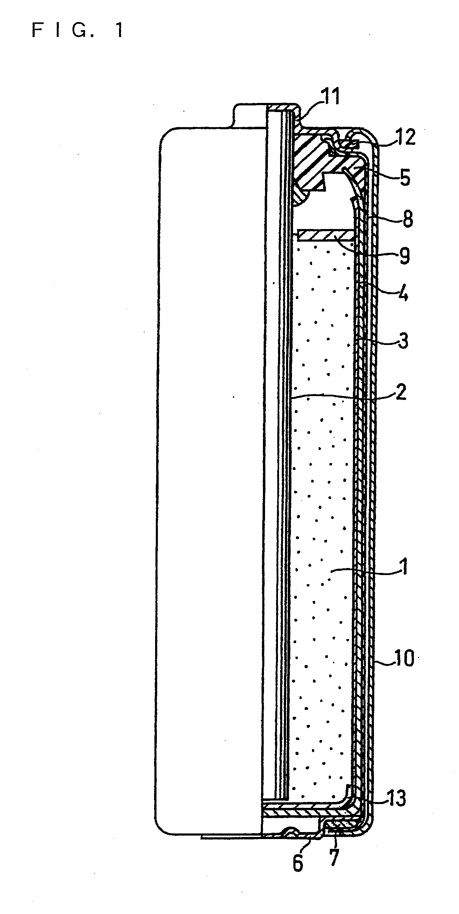

FIG. 1 is a partially sectional front view of a manganese dry battery according to the present invention.

### Best Mode for Carrying Out the Invention

The present inventors have made various examinations on battery specifications capable of allowing a minimum amount of bismuth to produce the largest effect. As a result, they have found that the addition of bismuth in the form of BiCl₃ into a separator can produce a sufficient effect of zinc corrosion prevention with a smaller amount of bismuth than conventional amounts, namely 0.005 to 0.05 part by weight per 100 parts by weight of the dry solid component in a paste material.

That is, the present invention relates to a manganese dry battery including a positive electrode material mixture including manganese dioxide, a negative electrode zinc can with a reduced lead content, and a separator that is interposed between the positive electrode material mixture and the negative electrode zinc can and made of a paper with a paste material applied thereto. The separator contains 0.005 to 0.05 part by weight of bismuth in the form of BiCl₃ per 100 parts by weight of the dry solid component in the paste material. That is, the separator contains 0.0075 to 0.075 part by weight of BiCl₃ per 100 parts by weight of the dry solid component in the paste material.

Since BiCl₃ is more soluble in an electrolyte than conventional bismuth oxides, a bismuth layer can be reliably formed on the surface of the negative electrode zinc can with a small amount of bismuth. It is thus possible to suppress zinc dissolution (corrosion) during storage as effectively as or more effectively than conventional cases where lead is contained.

If the bismuth content in the separator is less than 0.005 part by weight per 100 parts by weight of the dry solid component in the paste material, the corrosion resistance of the negative electrode can becomes insufficient. On the other hand, if the bismuth content in the separator is more than 0.05 part by weight per 100 parts by weight of the dry solid component in the paste material, the internal resistance increases during storage, thereby resulting in degradation of high-rate discharge performance.

Preferably, the separator further contains 0.01 to 1.0 part by weight of indium in the form of InCl₃ per 100 parts by weight of the dry solid component in the paste material. That is, the separator preferably contains 0.024 to 2.4 parts by weight of InCl₃ per 100 parts by weight of the dry solid component in the paste material.

Indium has the effect of enhancing the corrosion resistance of the negative electrode zinc can in the same manner as bismuth. However, since the speed at which an indium layer is formed on the surface of the negative electrode zinc can is slower than the speed at which a bismuth layer is formed, the discharge performance after a long-term storage is improved. Hence, indium has the effect of improving storage performance. Also, the use of InCl₃ together with the above-mentioned BiCl₃ can provide a sufficient storage performance even when the amount of indium is smaller than conventional amounts. It is thus possible to prevent an increase in internal resistance due to the use of a large amount of indium.

If the indium content in the separator is less than 0.01 part by weight per 100 parts by weight of the dry solid component in the paste material, indium cannot produce a sufficient effect of storage performance improvement. On the other hand, if the indium content in the separator exceeds 1.0 part by weight per 100 parts by weight of the dry solid component in the paste material, the internal resistance increases during storage, thereby resulting in degradation of high-rate discharge performance.
The separator used is prepared, for example, by dissolving a cross-linked starch and a vinyl-acetate-based binder in an alcohol solvent to form a paste material, applying the paste material onto kraft paper, and drying it.

The lead content in the negative electrode zinc can used in the manganese dry battery of the present invention is equal to or less than 0.03% by weight. Since the content of toxic lead is reduced, environmental pollution can be suppressed.
The Vickers hardness of the negative electrode zinc can is preferably 30 to 55 Hv. If the Vickers hardness of the negative electrode zinc can is equal to or more than 30 Hv, it is possible to reduce the adhesion of impurities to the zinc can surface during zinc can production and suppress gas evolution due to impurities. As a result, the initial discharge performance is improved. Also, since the adhesion of impurities to the zinc can surface is reduced, the pitting corrosion of the zinc can is suppressed and the corrosion resistance is improved. On the other hand, if the Vickers hardness of the negative electrode zinc can exceeds 55 Hv, during zinc can production the zinc alloy may become cracked in the rolling step of continuous casting process, thereby resulting in cracking of the zinc can and sealing failure.

The Vickers hardness of the negative electrode zinc can is determined, for example, by the Vickers hardness test method defined by JIS Z 2244.
The Vickers hardness of the negative electrode zinc can may be controlled, for example, by adding manganese, indium, or bismuth into the negative electrode zinc can. As the amount of such an element added to the negative electrode zinc can increases, the Vickers hardness increases. In order for the negative electrode zinc can to have a Vickers hardness of 30 to 55 Hv, for example, the manganese content in the negative electrode zinc can is preferably 0.001 to 0.005 % by weight. The bismuth content in the negative electrode zinc can is preferably 0.0005 to 0.002 % by weight. The indium content in the negative electrode zinc can is preferably 0.001 to 0.005 % by weight.

### Examples

Examples of the present invention are hereinafter described in details, but the present invention is not limited to these Examples.

### 〈〈Examples 1 to 20 and Comparative Examples 1 to 9〉〉

D-size manganese dry batteries (R20) were produced in the following procedure. FIG. 1 is a partially sectional front view of a D-size manganese dry battery of the present invention.
A positive electrode material mixture 1 was placed in a cylindrical negative electrode zinc can 4 with a bottom, with a separator 3 interposed therebetween. At this time, the positive electrode material mixture used was composed of a mixture of manganese dioxide serving as an active material, acetylene black serving as a conductive material, and an electrolyte containing 30% by weight of zinc chloride and 70% by weight of water in a weight ratio of 50:10:40. Also, the separator 3 used was prepared by dissolving a cross-linked starch and a vinyl-acetate-based binder in an alcohol solvent to form a paste material, applying the paste material onto kraft paper, and drying it. The separator 3 was disposed such that its face with the paste material applied thereto faced the negative electrode zinc can 4, in order to separate the positive electrode material mixture 1 from the negative electrode can 4. A carbon rod 2, which was prepared by sintering a carbon powder, was inserted in the middle of the positive electrode material mixture 1.

A central part of a polyolefin resin sealing member 5 was provided with a hole into which the carbon rod 2 was to be inserted. A paperboard was punched out into a circular shape having a hole in the center thereof, to obtain a guard paper 9. The carbon rod 2 was inserted into the holes of the sealing member 5 and the guard paper 9, and they were disposed in an upper part of the positive electrode material mixture 1. Then, the upper part of the carbon rod 2 was brought into contact with a positive electrode terminal 11 such that it functioned as the current collector of the positive electrode.
A resin tube 8 made of a heat-shrinkable resin film for providing insulation was fitted to the outer surface of the negative electrode can 4, so that its upper end covered the upper outer face of the sealing member 5 and its lower end covered the lower face of a seal ring 7.

The positive electrode terminal 11, made of a tin plate, was in a shape having a cap-like central part covering the upper end of the carbon rod 2 and a flat-plate-like brim. A resin insulating ring 12 was fitted to the flat-plate-like brim of the positive electrode terminal 11. A bottom paper 13 was disposed between the bottom of the positive electrode material mixture 1 and the negative electrode can 4 in order to provide insulation. The seal ring 7 was fitted to the outer face of the flat-plate-like outer circumference of a negative electrode terminal 6.
An outer metal can 10, made of a tubular tin plate, was fitted to the outer face of the resin tube 8. Its lower edge was bent inward, while its upper edge was curled inward and the tip of the upper edge was crimped onto the insulating ring 12.

In producing the manganese dry batteries, the amount of BiCl₃ added to the paste material for the separator was varied as shown in Table 1. In Table 1, the amount of BiCl₃ added represents the amount of bismuth per 100 parts by weight of the dry solid component in the paste material.
Also, the amount of lead added to the negative electrode zinc can was varied as shown in Table 1.
Further, InCl₃ was added in various ratios as shown in Table 1 to the paste material containing BiCl₃. In Table 1, the amount of InCl₃ added represents the amount of indium per 100 parts by weight of the dry solid component in the paste material.

**[Table 1]**

| | Lead content in negative electrode zinc can (wt%) | Amount of compounds added to separator (part by weight) | | Amount of voltage drop after storage (mV) | Continuous discharge time at 2.2 Ω (min) | |
|---|---|---|---|---|---|---|
| | | BiCl₃ | InCl₃ | | Initial stage | After storage |
| Comp. Example 1 | 0.4 | 0 | 0 | 52 | 557 | 520 |
| Comp. Example 2 | 0.1 | 0 | 0 | 64 | 562 | 478 |
| Comp. Example 3 | 0.03 | 0 | 0 | 78 | 564 | 384 |
| Comp. Example 4 | 0.01 | 0 | 0 | 81 | 565 | 372 |
| Comp. Example 5 | 0 | 0 | 0 | 84 | 565 | 368 |
| Comp. Example 6 | 0.03 | 5 | 0 | 48 | 544 | 447 |
| Comp. Example 7 | 0.03 | 0 | 5 | 57 | 548 | 466 |
| Comp. Example 8 | 0.03 | 0.001 | 0 | 73 | 565 | 395 |
| Example 1 | 0.03 | 0.005 | 0 | 59 | 563 | 508 |
| Example 2 | 0.03 | 0.01 | 0 | 54 | 558 | 514 |
| Example 3 | 0.03 | 0.05 | 0 | 51 | 555 | 525 |
| Comp. Example 9 | 0.03 | 0.5 | 0 | 49 | 552 | 468 |
| Example 4 | 0.03 | 0.01 | 0.005 | 55 | 557 | 510 |
| Example 5 | 0.03 | 0.01 | 0.01 | 52 | 557 | 522 |
| Example 6 | 0.03 | 0.01 | 0.1 | 51 | 554 | 524 |
| Example 7 | 0.03 | 0.01 | 1 | 49 | 551 | 529 |
| Example 8 | 0.03 | 0.01 | 5 | 46 | 539 | 462 |
| Example 9 | 0.01 | 0.005 | 0 | 61 | 564 | 487 |
| Example 10 | 0.01 | 0.01 | 0 | 56 | 560 | 511 |
| Example 11 | 0.01 | 0.05 | 0 | 54 | 557 | 516 |
| Example 12 | 0.01 | 0.01 | 0.01 | 55 | 561 | 511 |
| Example 13 | 0.01 | 0.01 | 0.1 | 54 | 557 | 517 |
| Example 14 | 0.01 | 0.01 | 1 | 52 | 552 | 523 |
| Example 15 | 0 | 0.005 | 0 | 62 | 564 | 482 |
| Example 16 | 0 | 0.01 | 0 | 57 | 562 | 509 |
| Example 17 | 0 | 0.05 | 0 | 54 | 558 | 515 |
| Example 18 | 0 | 0.01 | 0.01 | 56 | 562 | 511 |
| Example 19 | 0 | 0.01 | 0.1 | 55 | 558 | 513 |
| Example 20 | 0 | 0.01 | 1 | 52 | 555 | 524 |

As shown in Table 1, manganese dry batteries of Examples 1 to 18 and Comparative Examples 1 to 11 were produced by using, in various combinations, negative electrode zinc cans with different lead contents and separators with different kinds and amounts of additives for paste material. The manganese dry batteries obtained were evaluated for their high-rate discharge performance and storage performance in the following manner.

Batteries in an initial stage and after a three-month storage at 45°C were continuously discharged at a load of 2.2 Ω in an environment at 20±2°C until the closed circuit voltage reached 0.8 V, in order to measure the discharge time.
Also, before the above test, the voltages of the batteries in the initial stage and after the three-month storage at 45°C were measured in order to check the amount of decrease in battery voltage due to storage. When the amount of voltage decrease was less than 65 mV, the storage performance was judged good.

The evaluation results are shown in Table 1. The batteries of Comparative Examples 3 to 5, in which no BiCl₃ was added to the paste material for the separator and the lead content in the negative electrode zinc can was reduced to 0.03% by weight or less, exhibited poor storage performance compared with Comparative Examples 1 and 2, since the corrosion resistance of the negative electrode zinc can derived from lead was reduced.

On the other hand, even when the lead content in the negative electrode zinc can was 0.03% by weight or less, the batteries of Examples 1 to 3, 9 to 11, and 15 to 17, in which 0.001 to 0.05 part by weight of bismuth was added in the form of BiCl₃ to the separator per 100 parts by weight of the dry solid component in the paste material, exhibited excellent high-rate discharge performance and storage performance.

However, the batteries of Comparative Examples 6 and 9, in which the separator included more than 0.05% by weight of bismuth in the form of BiCl₃ per 100 parts by weight of the dry solid component in the paste material, exhibited decreases particularly in after-storage high-rate discharge performance, since the excessive amount of bismuth increased the internal resistance. The battery of Comparative Example 8, in which the separator included less than 0.005 part by weight of bismuth in the form of BiCl₃ per 100 parts by weight of the dry solid component in the paste material, exhibited a decline in storage performance, since the insufficient amount of bismuth could not sufficiently improve the corrosion resistance of the negative electrode zinc can.

Even when the lead content in the negative electrode zinc can was 0.03% by weight or less, the batteries of Examples 5 to 7, 12 to 14, and 18 to 20, in which the separator included 0.01 to 1 part by weight of indium in the form of InCl₃ as well as 0.01 part by weight of bismuth in the form of BiCl₃ per 100 parts by weight of the dry solid component in the paste material, exhibited further improvements in storage performance. However, the battery of Example 8, in which the separator included more than 1 part by weight of indium in the form of InCl₃ per 100 parts by weight of the dry solid component in the paste material, exhibited a decline in high-rate discharge performance, since the excessive amount of indium increased the internal resistance.

### «Examples 21 to 36 and Comparative Examples 10 to 11»

Manganese dry batteries were produced in the same manner as in Example 1, except for the use of negative electrode zinc cans with lead contents, manganese contents, indium contents, and bismuth contents shown in Table 2 and separators with BiCl₃ contents shown in Table 2. They were evaluated for their high-rate discharge performance and storage performance in the above manner. In Table 2, the amount of BiCl₃ added represents the amount of bismuth per 100 parts by weight of the dry solid component in the paste material.
Further, the Vickers hardness of the negative electrode zinc cans was determined by using the Vickers hardness test method defined by JIS Z 2244.
Table 2 shows the evaluation results together with the results of Examples 3 and Comparative Examples 1 to 6.

**[Table 2]**

| | Content of elements in negative electrode zinc can (wt%) | | | | Vickers hardness of negative electrode zinc can (Hv) | Amount of BiCl₃ added to separator (part by weight) | Continuous discharge time at 2.2 Ω (min) | |
|---|---|---|---|---|---|---|---|---|
| | Pb | Mn | In | Bi | | | Initial stage | After storage |
| Comp. Example 1 | 0.4 | 0 | 0 | 0 | 36 | 0 | 557 | 520 |
| Comp. Example 2 | 0.1 | 0 | 0 | 0 | 32 | 0 | 562 | 478 |
| Camp. Example 3 | 0.03 | 0 | 0 | 0 | 25 | 0 | 564 | 384 |
| Comp. Example 4 | 0.01 | 0 | 0 | 0 | 23 | 0 | 565 | 372 |
| Comp. Example 5 | 0 | 0 | 0 | 0 | 20 | 0 | 565 | 368 |
| Example 3 | 0.03 | 0 | 0 | 0 | 25 | 0.05 | 555 | 525 |
| Comp. Example 6 | 0.03 | 0 | 0 | 0 | 25 | 5 | 544 | 447 |
| Example 21 | 0.03 | 0.0005 | 0 | 0 | 27 | 0.05 | 550 | 510 |
| Example 22 | 0.03 | 0.001 | 0 | 0 | 35 | 0.05 | 553 | 538 |
| Example 23 | 0.03 | 0.003 | 0 | 0 | 45 | 0.05 | 558 | 539 |
| Example 24 | 0.03 | 0.005 | 0 | 0 | 55 | 0.05 | 560 | 540 |
| Example 25 | 0 | 0.001 | 0 | 0 | 30 | 0.05 | 554 | 529 |
| Example 26 | 0.03 | 0 | 0.0005 | 0 | 28 | 0.05 | 552 | 515 |
| Example 27 | 0.03 | 0 | 0.001 | 0 | 35 | 0.05 | 557 | 537 |
| Example 28 | 0.03 | 0 | 0.005 | 0 | 55 | 0.05 | 560 | 545 |
| Example 29 | 0 | 0 | 0.001 | 0 | 30 | 0.05 | 558 | 527 |
| Example 30 | 0.03 | 0 | 0 | 0.0003 | 28 | 0.05 | 551 | 512 |
| Example 31 | 0.03 | 0 | 0 | 0.0005 | 35 | 0.05 | 554 | 540 |
| Example 32 | 0.03 | 0 | 0 | 0.002 | 55 | 0.05 | 559 | 541 |
| Example 33 | 0 | 0 | 0 | 0.0005 | 30 | 0.05 | 556 | 532 |
| Comp. Example 10 | 0.03 | 0.003 | 0 | 0 | 45 | 0.001 | 559 | 460 |
| Example 34 | 0.03 | 0.003 | 0 | 0 | 45 | 0.005 | 559 | 532 |
| Example 23 | 0.03 | 0.003 | 0 | 0 | 45 | 0.05 | 558 | 539 |
| Comp. Example 11 | 0.03 | 0.003 | 0 | 0 | 45 | 0.1 | 548 | 475 |
| Example 35 | 0.01 | 0.003 | 0 | 0 | 43 | 0.05 | 555 | 530 |
| Example 36 | 0 | 0.003 | 0 | 0 | 41 | 0.05 | 554 | 528 |

The batteries of Comparative Examples 3 to 5 exhibited poor after-storage discharge performance compared with the batteries of Comparative Examples 1 and 2, since the lead content in the negative electrode zinc can was reduced and the Vickers hardness of the negative electrode zinc can was low.
The battery of Example 3, in which the lead content in the negative electrode zinc can was the same as that of the battery of Comparative Example 3, exhibited an improvement in after-storage discharge performance compared with the battery of Comparative Example 3, since bismuth was added to the separator.

In the batteries of Examples 21 to 25, the bismuth content in the separator was set to 0.05 part by weight per 100 parts by weight of the dry solid component in the paste material, and the manganese content in the negative electrode zinc can was varied to values shown in Table 2.
The batteries of Examples 22 to 25, in which the Vickers hardness in the negative electrode zinc can was 30 to 55 Hv, exhibited excellent high-rate discharge performance in the initial stage and after storage. The battery of Example 21, in which the Vickers hardness of the negative electrode zinc can was low, exhibited a decrease particularly in after-storage discharge performance. In the case of setting the lead content to 0.03% by weight and increasing the manganese content to more than 0.005% by weight, the Vickers hardness exceeded 55 Hv. Thus, in the rolling step of continuous casting process during zinc can production, a problem of zinc alloy cracking occurred.

In the batteries of Examples 26 to 29, the bismuth content in the separator was set to 0.05 part by weight per 100 parts by weight of the dry solid component in the paste material, and the indium content in the negative electrode zinc can was varied to values shown in Table 2.
The batteries of Examples 27 to 29, in which the Vickers hardness in the negative electrode zinc can was 30 to 55 Hv, exhibited excellent high-rate discharge performance in the initial stage and after storage. The battery of Example 26, in which the Vickers hardness of the negative electrode zinc can was low, exhibited a decrease particularly in after-storage discharge performance. In the case of setting the lead content to 0.03% by weight and increasing the indium content to more than 0.005% by weight, the Vickers hardness exceeded 55 Hv. Thus, in the rolling step of continuous casting process during zinc can production, a problem of zinc alloy cracking occurred.

In the batteries of Examples 30 to 33, the bismuth content in the separator was set to 0.05 part by weight per 100 parts by weight of the dry solid component in the paste material, and the bismuth content in the negative electrode zinc can was varied to values shown in Table 2.
The batteries of Examples 31 to 33, in which the Vickers hardness in the negative electrode zinc can was 30 to 55 Hv, exhibited excellent high-rate discharge performance in the initial stage and after storage. The battery of Example 30, in which the Vickers hardness of the negative electrode zinc can was low, exhibited a decrease particularly in after-storage discharge performance. In the case of setting the lead content to 0.03% by weight and increasing the bismuth content to more than 0.002% by weight, the Vickers hardness exceeded 55 Hv. Thus, in the rolling step of continuous casting process during zinc can production, a problem of zinc alloy cracking occurred.

In the batteries of Examples 34 and 23 and Comparative Examples 10 and 11, the manganese content in the negative electrode zinc can was set to 0.003% by weight, and the amount of BiCl₃ added to the separator was varied to values as shown in Table 2.
The batteries of Examples 34 and 23, in which the bismuth content in the separator was 0.005 to 0.05 part by weight per 100 parts by weight of the dry solid component in the paste material, exhibited excellent high-rate discharge performance in the initial stage and after storage. The battery of Comparative Example 10, in which the bismuth content in the separator was 0.001 part by weight per 100 parts by weight of the dry solid component in the paste material, exhibited a decline in after-storage high-rate discharge performance. The battery of Comparative Example 11, in which the bismuth content in the separator was 0.1 part by weight per 100 parts by weight of the dry solid component in the paste material, exhibited a decline in after-storage high-rate discharge performance.

The batteries of Examples 35 and 36, in which the lead content in the negative electrode zinc can was less than that of the battery of Example 23, also exhibited excellent high-rate discharge performance and storage performance.

### Industrial Applicability

The manganese dry battery of the present invention is excellent in high-rate discharge performance and storage performance. Therefore, it is preferably used as the power source for electronic devices such as portable appliances and information devices.

## Claims

1. A manganese dry battery comprising: a positive electrode material mixture including manganese dioxide; a negative electrode zinc can with a lead content equal to or less than 0.03% by weight; and a separator comprising a paper with a paste material applied thereto,
wherein said separator contains 0.005 to 0.05 part by weight of bismuth in the form of BiCl₃ per 100 parts by weight of a dry solid component in said paste material.

2. The manganese dry battery in accordance with claim 1, wherein said separator further contains 0.01 to 1.0 part by weight of indium in the form of InCl₃ per 100 parts by weight of the dry solid component in said paste material.

3. The manganese dry battery in accordance with claim 1, wherein said negative electrode zinc can has a Vickers hardness of 30 to 55 Hv.

4. The manganese dry battery in accordance with claim 3, wherein said negative electrode zinc can contains 0.001 to 0.005 % by weight of manganese.

5. The manganese dry battery in accordance with claim 3, wherein said negative electrode zinc can contains 0.0005 to 0.002 % by weight of bismuth.

6. The manganese dry battery in accordance with claim 3, wherein said negative electrode zinc can contains 0.001 to 0.005 % by weight of indium.
